# FASCICULE DE BREVET EUROPEEN

(11) **EP 2 463 695 B1**
(45) Date de publication et mention de la délivrance du brevet: **05.08.2015**
(21) Numéro de dépôt: 11192997.2
(22) Date de dépôt: 12.12.2011
(51) Int. Cl.: G02B 6/122, G02B 6/132, G02B 6/10, G02F 1/025

(54) **Procédé pour réaliser un guide optique à fente sur silicium**
Verfahren zur Herstellung eines Lichtwellenleiters mit Schlitz auf Silizium
Method for making a slotted optical guide on silicon

(30) Priorité: 13.12.2010 FR 1060438
(43) Date de publication de la demande: 13.06.2012
(73) Titulaire: Commissariat à l'Énergie Atomique et aux Énergies Alternatives, 75015 Paris (FR); ALCATEL LUCENT, 92100 Boulogne-Billancourt (FR); Centre National de la Recherche Scientifique, 75016 Paris (FR); Université Paris-Sud 11, 91405 Orsay Cedex (FR)
(72) Inventeur: Fedeli, Jean-Marc, 38120 Saint-Egreve (FR); Duan, Guang-Hua, 92330 Sceaux (FR); Marris-Morini, Delphine, 92120 Montrouge (FR); Rasigade, Gilles, 75012 Paris (FR); Vivien, Laurent, 91430 Vauhallan (FR); Ziebell, Melissa, 75005 Paris (FR)
(74) Mandataire: Guérin, Michel

(56) Documents cités:
- FR-A1- 2 907 916
- US-B2- 6 845 198
- B.M.A. RAHMAN ET AL.: PROCEEDINGS OF SPIE 2010 SILICON PHOTONICS AND PHOTONIC INTEGRATED CIRCUITS II, vol. 7719, 12 mai 2010 (2010-05-12), pages 77191A-1-77191A-10, XP040523986,

## Description

L'invention concerne la fabrication de circuits de photonique sur silicium. La photonique sur silicium est le domaine des composants optoélectroniques capables de manipuler des informations sous forme optique, ces composants étant réalisés dans des technologies analogues à celles qui sont utilisées pour des circuits intégrés d'électronique. Ces composants optoélectroniques utilisent le même matériau de base, à savoir le silicium, que les composants purement électroniques. Ce sont principalement des modulateurs optiques, démodulateurs, et circuits optiques non linéaires. Ils peuvent être associés, sur un même substrat, à des circuits électroniques qui servent à les commander ou qui servent à recueillir et traiter électroniquement les signaux électriques issus de la conversion des signaux optiques dans des photodétecteurs. Des sources de lumière peuvent également être intégrées sur le même substrat. Le brevet US6 845 198 décrit un modulateur optique sur silicium.

Un des concepts de base consiste à former dans le silicium des guides de lumière de dimension très faibles (quelques centaines de nanomètres de section) soumis à l'influence de concentrations variables de porteurs (électrons ou trous) dans le silicium. Par la modulation électrique de la concentration des porteurs, on peut agir sur l'indice de réfraction du milieu optique du guide ; on agit donc sur la vitesse de propagation de la lumière dans le guide.

Par exemple, en modulant le temps de propagation de la lumière dans deux branches optiques distinctes, commandées séparément, on produit un déphasage entre les ondes optiques qui sortent des deux branches. En les faisant interférer, on convertit ce déphasage en une modulation d'amplitude. C'est le principe des interféromètres de Mach Zehnder.

On a imaginé notamment de réaliser des guides en silicium dits guides à fentes, comprenant deux murs de silicium dopé (à fort indice de réfraction) séparés par une fente remplie d'un milieu isolant, ou parfois semi-isolant, à faible indice de réfraction ; la lumière est confinée dans le guide du fait des discontinuité d'indice entre les murs de silicium et le matériau de la fente. Le confinement est d'autant meilleur que la fente est plus étroite et que la différence des indices est plus élevée. Les deux murs peuvent être dopés avec des impuretés de même type et le guide se comporte électriquement comme une capacité ; la tension aux bornes de la capacité crée des concentrations de charges électriques dans les murs de silicium ; les variations de concentrations (passives ou fonction d'une commande électrique) engendrent des variations d'indice de réfraction. Mais les murs de silicium peuvent aussi être dopés avec des impuretés de type opposé, et le guide se comporte alors comme une jonction PN ; les variations de tension aux bornes de la jonction créent aussi des accumulations ou déplétions de charges électriques agissant sur l'indice de réfraction donc sur la propagation de la lumière. L'isolant (ou semi-isolant) placé entre les deux murs de silicium constitue une barrière électrique évitant le transport de porteurs de charges entre les murs. L'article "Silicon Optical Modulators" de G.T. Reed, G. Mashanovich, F.Y. Gardes, et D.J. Thomson dans Nature Photonics, vol 4, Août 2010, pages 518-526, décrit des modulateurs optiques sur silicium utilisant des structures de guide à fente.

Avec de tels guides à fente, on peut réaliser des commutateurs optiques, des sources de lumière, et des capteurs optiques.

On a déjà proposé de réaliser de tels guides en creusant une fente dans une couche de silicium et en remplissant cette fente de matériau isolant ou semi-isolant. Mais ce procédé ne permet pas de faire des fentes très étroites et ayant une hauteur suffisante, car le remplissage ne se fait pas bien.

On a également proposé, dans la publication de brevet FR 2 907 916, de réaliser des guides à fentes sur substrat SOI (de l'anglais "Silicon on Insulator", c'est-à-dire silicium sur isolant). Le substrat SOI est un substrat de silicium recouvert d'une couche isolante (oxyde de silicium) elle-même recouverte d'une couche active de silicium. Dans cette publication, on dépose d'abord une couche d'oxyde de silicium non stoechiométrique SiOₓ, on la grave pour former deux tranchées parallèles proches l'une de l'autre séparées par un mur isolant ou semi-isolant, et on remplit ensuite les tranchées de silicium. Le silicium peut être amorphe ou polycristallin. Mais le silicium amorphe ou polycristallin est bien moins bon que le silicium monocristallin du point de vue de l'effet attendu qui est d'obtenir des variations rapides et bien définies de porteurs libres dans le silicium. Pour remplir les tranchées de silicium monocristallin, il faut que le substrat SOI soit préalablement recouvert d'une couche de silicium monocristallin avant dépôt de la couche de SiOₓ. Cette couche monocristalline peut alors servir de germe pour faire croître du silicium monocristallin dans les tranchées ouvertes dans la couche de SiOₓ.

Cependant, le procédé décrit dans cette publication a l'inconvénient important de ne pas permettre une isolation électrique suffisante entre les deux murs de silicium ; ils sont en effet reliés à leur base du fait qu'ils reposent tous deux sur une même couche de silicium monocristallin. Même si cette couche est très peu dopée et très fine, elle n'est pas complètement isolante et des porteurs peuvent s'y déplacer, d'autant plus que la fente entre les deux murs est très étroite.

La présente invention propose un procédé amélioré pour fabriquer un guide à fente, qui ne présente pas cet inconvénient et qui est facile à mettre en oeuvre indépendamment de la largeur souhaitée pour la fente.

Le procédé selon l'invention est un procédé de fabrication d'un guide optique à fente sur silicium, comprenant le dépôt d'une fine couche de silicium monocristallin sur un substrat recouvert d'une couche enterrée isolante, et ultérieurement le dépôt uniforme d'une couche isolante ou semi-isolante sur la couche de silicium, le creusement sur toute l'épaisseur de cette couche isolante ou semi-isolante de deux ouvertures à flancs verticaux séparées par un intervalle étroit constituant un mur vertical isolant ou semi-isolant s'étendant le long d'un trajet qui est le trajet désiré pour le guide à fente, et la croissance épitaxiale de silicium monocristalllin dans les ouvertures, caractérisé en ce qu'avant le dépôt uniforme de la couche isolante ou semi-isolante, on effectue une oxydation thermique locale dans toute la profondeur de la fine couche de silicium monocristallin pour former une bande oxydée isolante s'étendant le long du trajet du mur vertical, sous celui-ci et de part et d'autre de celui-ci sur toute la longueur du trajet, de sorte que le mur vertical isolant qui sera ultérieurement formé ne soit pas adjacent à la fine couche de silicium monocristallin.

Après l'étape d'oxydation de la fine couche de silicium monocristallin, on dépose la couche isolante ou semi-isolante et on la grave ; Puis on effectue la croissance épitaxiale de silicium sur toute la hauteur du mur vertical isolant ou semi-isolant, y compris au-dessus de la bande oxydée isolante et jusqu'à ce que le silicium vienne en contact avec le mur sur toute sa hauteur. Lors de cette croissance, le silicium recouvre non seulement la fine couche de silicium monocristallin mais aussi la bande oxydée jusque contre le mur vertical. Mais bien qu'à cet endroit il ne soit pas directement en contact avec la fine couche monocristalline il en prend cependant la structure monocristalline puisqu'il est tout proche de zones croissant de manière monocristalline au-dessus de la fine couche. On peut faire croître le silicium à une hauteur supérieure à celle du mur, et dans ce cas on effectue une étape de polissage mécanique et/ou chimique pour ajuster la hauteur du mur et du silicium.

Avant d'effectuer la croissance monocristalline du silicium, on peut effectuer une étape de réduction de l'épaisseur du mur isolant ou semi-isolant ; cette réduction peut se faire par gravure chimique ou par gravure sèche isotrope.

Le silicium qu'on fait croître est de préférence peu ou pas dopé. Il est dopé dans une étape postérieure au dépôt. De préférence, on dope le silicium avec une impureté de type N d'un côté du mur vertical et avec une impureté de type P de l'autre côté.

D'autres caractéristiques et avantages de l'invention apparaîtront à la lecture de la description détaillée qui suit et qui est faite en référence aux dessins annexés dans lesquels :
- la figure 1 représente en perspective un schéma de principe de la structure de guide à fente qu'on souhaite réaliser, pour former un déphaseur optique à diode ;
- les figures 2 à 9 représentent les étapes successives de fabrication du mur vertical isolant qui constituera la fente du guide à fente ;
- les figures 10 à 14 représentent les étapes de croissance du silicium qui encadre la fente, et le dopage du silicium ;
- les figures 15 et 16 représentent la fermeture supérieure du guide et la gravure du silicium qui le constitue ;
- les figures 17 à 19 représentent la formation de contacts électrique d'accès au guide pour la modulation de concentration de porteurs.

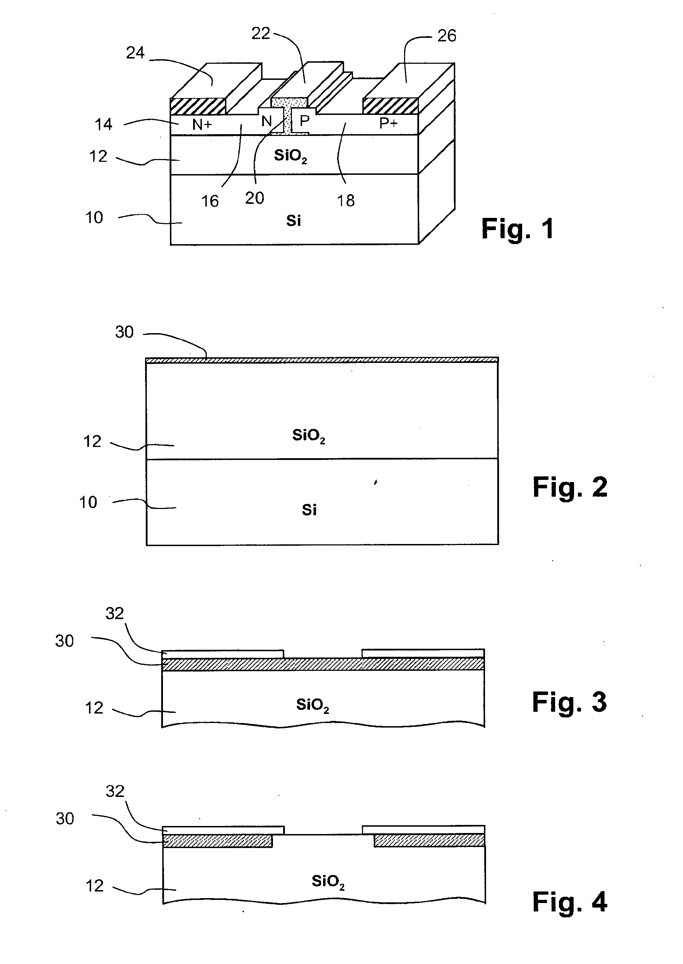

La structure de la figure 1 est une figure de principe d'un guide à fente sur silicium, formé sur un substrat SOI, qu'on peut réaliser avec le procédé selon l'invention. Dans le cas représenté, le guide comprend une jonction NP avec une fente isolante ou semi-isolante séparant la région N de la région P ; cependant, on pourrait aussi envisager en restant dans le cadre de l'invention, un guide sans jonction qui comprendrait alors, de chaque côté de la fente des régions de même type N ou P et non des régions de type opposé ; ce guide se comporterait comme une capacité pure, les variations de charges des armatures de la capacité induisant des variations d'indice optique dans le guide, donc des variations de retard de phase optique. L'avantage des guides à diode est cependant que les variations de potentiel appliquées aux bornes de la jonction induisent des variations de concentration par déplétion de porteurs majoritaires, et cela sur les deux côtés de la fente ; le processus de déplétion est très rapide. Dans le cas où on a deux régions N ou deux régions P, l'action se fait d'un côté sur les porteurs majoritaires, et de l'autre sur les porteurs minoritaires, ce qui ralentit le processus de variation des concentrations de charges. On décrira la suite du procédé selon l'invention uniquement à propos d'un guide à fente à jonction PN. L'invention est applicable par ailleurs à des jonctions comportant du silicium intrinsèque en plus des zones dopées N et P (diodes PIN).

Le guide à fente comprend un substrat de silicium de type SOI. Il est composé d'un substrat de silicium 10 recouvert d'une couche isolante 12 en oxyde de silicium SiO₂, elle-même recouverte d'une couche de silicium 14 dans laquelle sont formées une région 16 dopée de type N et une région 18 dopée de type P. Une fente 20 remplie de matériau isolant ou semi-isolant sépare la région N de la région P. La fente est recouverte d'une couche isolante 22. Le matériau isolant ou semi-isolant de la fente a un indice optique très inférieur à celui des murs de silicium dopé qui encadrent la fente. A titre d'exemple, le matériau de la fente est à base d'oxyde de silicium d'indice environ 1,5 alors que le silicium dopé a un indice de 3 à 4. La fente est très étroite (quelques dizaines de nanomètres) et sa hauteur est très supérieure à sa largeur (de 5 à 10 fois supérieure).

Des contacts métalliques 24 et 26 peuvent être pris sur les régions N et P, ou sur des régions plus dopées N+ et P+ prolongeant les régions N et P respectivement. Ces contacts servent à commander la modulation de concentration de porteurs dans les régions N et P pour agir sur la vitesse de propagation de la lumière dans le guide à fente.

Pour fabriquer une telle structure, on part d'un substrat de silicium sur isolant comprenant (Figure 2) : un substrat de silicium 10 recouvert d'une couche isolante 12 de SiO₂, sur laquelle on a fait croître une très fine couche de silicium monocristallin 30. L'épaisseur de cette couche 30 est de préférence inférieure à 100 nanomètres ; une couche de 30 à 60 nanomètres d'épaisseur est préférée. Cette couche est peu ou pas dopée (par exemple un taux d'impuretés d'environ 10¹⁵ atomes/cm³). Elle sert essentiellement de germe de croissance monocristalline pour une croissance ultérieure de silicium. Elle doit être suffisamment mince pour pouvoir être localement oxydée sans difficulté sur toute son épaisseur.

On dépose sur cette couche de silicium 30 une couche de masquage 32, de préférence en nitrure de silicium Si₃N₄ ; on grave la couche de masquage 32 par photolithographie pour définir une ouverture qui suit le trajet, dans le sens de la longueur, de la fente que l'on désire réaliser, et qui est plus large que cette fente. Par longueur de la fente on entend la dimension d'extension le long de la surface du substrat. Le trajet de la fente dans le sens de la longueur peut être court ou long, droit ou brisé ou courbe.

Par exemple, si la fente doit avoir une largeur de 30 nanomètres, on ouvre la couche de masquage sur 100 ou 200 nanomètres de large. La figure 3 représente cette étape ; on notera que l'échelle est dilatée dans le sens de la hauteur par rapport à l'échelle de la figure 2, pour mieux faire apparaître la couche 30. Le rôle de la couche de masquage 32 est de protéger le silicium de la couche 30 contre une oxydation thermique.

On effectue alors une étape d'oxydation thermique du silicium 30 à haute température. Le silicium s'oxyde complètement et devient de l'oxyde SiO₂ là où il n'est pas recouvert de la couche de masquage 32 (Figure 4). La couche de silicium 30 est donc maintenant séparée en deux parties par une bande oxydée 40 suivant le trajet désiré pour la fente, de sorte qu'on pourra ultérieurement appliquer des potentiels différents aux portions de silicium situées de part et d'autre de la zone isolante ainsi formée.

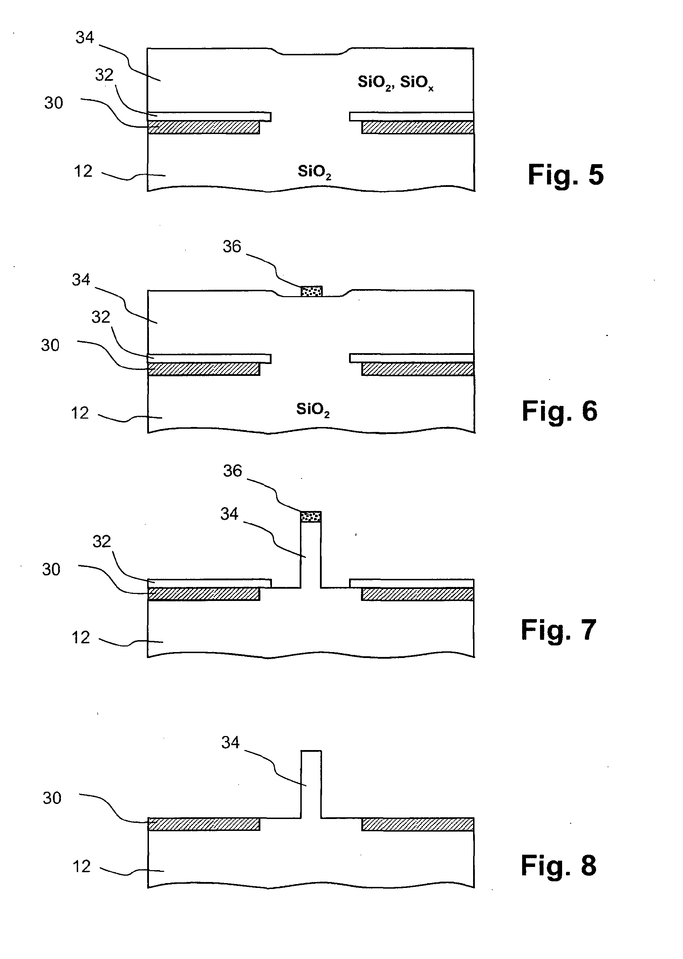

On conserve la couche de masquage et on recouvre le substrat (Figure 5) d'une couche 34 de la matière isolante ou semi-isolante qui composera le matériau de la fente. Cette matière peut être de l'oxyde de silicium stoechiométrique SiO₂, ou encore de l'oxyde de silicium non stoechiométrique SiOₓ. Si l'oxyde est non stoechiométrique avec x<2, un recuit de la couche produira des inclusions locales de cristaux de silicium noyés dans de l'oxyde isolant SiO₂, aboutissant à une couche semi-isolante. La hauteur de la couche 34 est de plusieurs centaines de nanomètres par exemple 500 nanomètres. Elle est largement supérieure à la largeur désirée pour la fente du guide, en ce sens que le rapport hauteur/largeur est d'au moins 2, et de préférence compris entre 5 et 10.

Dans certains cas, la couche isolante ou semi-isolante pourrait aussi être en matériau de type III-V (AsGa ou InP) pour réaliser des sources de lumière. Dans ce cas, cette couche serait collée plutôt que déposée in situ.

On dépose alors (figure 6) une nouvelle couche de masquage 36 que l'on grave par photolithographie pour définir une bande qui suit le tracé, dans le sens de la longueur, de la fente à réaliser. La largeur de cette bande peut être la largeur finale de la fente souhaitée, mais si la photolithographie ne permet pas de faire une largeur aussi faible (typiquement 30 nanomètres), on formera une bande de couche 36 plus large, par exemple 100 nanomètres de large, et on effectuera ultérieurement une réduction de largeur de fente comme on l'expliquera plus loin. Le masque 36 est de préférence en nitrure de silicium, ou en carbure de silicium, ou un métal ou une résine, résistant aux produits d'attaque de la couche 34 de SiO₂ ou SiOₓ.

On creuse la couche 34 (figure 7) par gravure anisotrope verticale ; l'attaque est arrêtée lorsqu'on atteint la couche 32 située au-dessous de la couche 34. Les ouvertures formées pendant cette étape sont à flancs verticaux. On forme simultanément deux ouvertures très proches l'une de l'autre, respectivement à gauche et à droite du trajet désiré pour la fente. Il subsiste un mur vertical 34 situé au-dessus de la bande 40 qui a été oxydée à l'étape de la figure 4.

On élimine par voie chimique ou par gravure sèche isotrope à la fois la couche 32 et la couche 36 (Figure 8). Cette opération est particulièrement simple si ces deux couches sont en nitrure de silicium. Cette élimination est faite avec un produit de gravure qui n'attaque pas la couche 34 d'oxyde de silicium. Il subsiste alors un mur vertical de couche isolante ou semi-isolante 34, reposant sur zone isolante 40 plus large que le mur ; le mur et la zone isolante 40 suivent le trajet désiré pour le guide à fente à la surface du substrat, sur toute la longueur de ce trajet. A l'extérieur de la zone isolante 40, on trouve le silicium dénudé de la couche originale 30 ; ce silicium ne vient pas en contact avec le mur isolant 34.

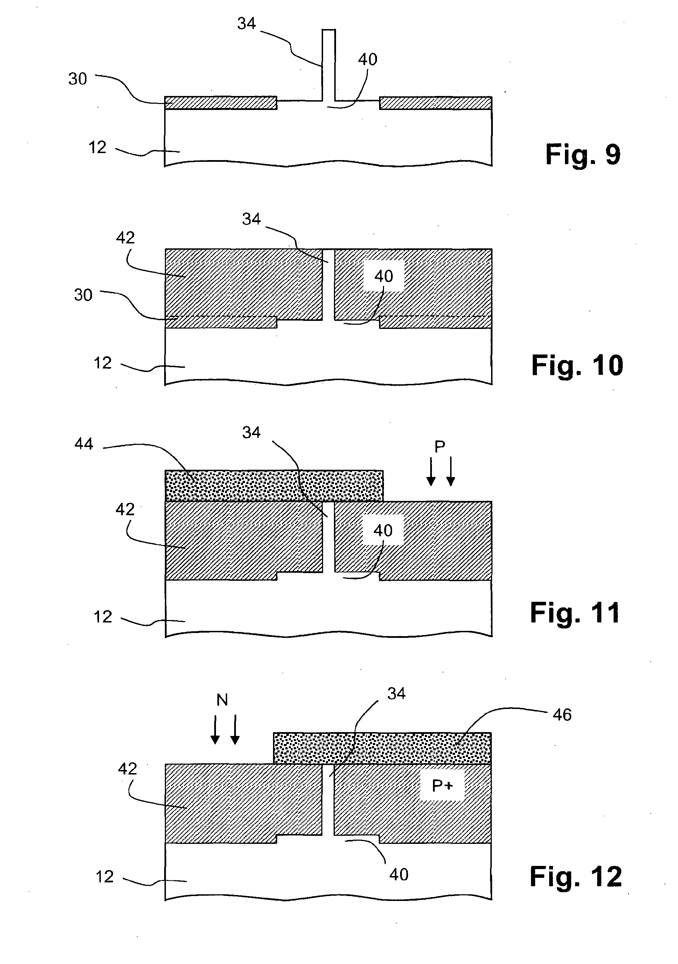

On peut alors, si nécessaire, procéder à une attaque anisotrope du mur vertical du matériau servant à constituer la fente. Cette attaque sert à amincir encore le mur, pour le faire passer par exemple d'une largeur de 100 nanomètres à une largeur de 30 à 50 nanomètres (Figure 9). Cette gravure isotrope peut réduire la hauteur de l'oxyde de silicium sur lequel repose le mur, mais cela n'a pas d'inconvénient. Alternativement, dans le cas où le mur est fait dans un composé SiOₓ non stoechiométrique, on peut effectuer la réduction de largeur du mur en deux étapes qui sont d'abord une oxydation du composé SiOₓ sur une certaine profondeur (par exemple 30 nanomètres), formant un oxyde stoechiométrique, puis une élimination sélective de l'oxyde stoechiométrique par un produit qui n'attaque pas ou peu l'oxyde non stoechiométrique.

On fait croître alors une couche épitaxiale de silicium monocristallin 42 sur une épaisseur correspondant au moins à la hauteur du mur isolant ou semi-isolant 34. La croissance épitaxiale se fait en hauteur et latéralement. Elle recouvre les zones isolantes latérales 40 de part et d'autre du mur et peut recouvrir aussi le mur. Dans le cas où l'épaisseur de silicium est telle que le mur est recouvert par le silicium, on procède ensuite à une étape de polissage mécanique et/ou chimique (CMP) pour ramener le haut du silicium et le haut du mur dans un même surface plane, à une hauteur désirée (figure 10).

Le silicium qu'on fait croître à ce stade est du silicium intrinsèque et peu dopé (par exemple aux alentours de 10¹⁵ atomes par centimètre cube), dont on complète ensuite le dopage P ou N en fonction des besoins.

A la figure 11 on effectue un dopage de la zone P en masquant le substrat par un masque de résine 44 sur toute la partie gauche de la figure, incluant le mur isolant ou semi-isolant 34. Le dopage est fait par implantation ionique ; il sera suivi ultérieurement d'un recuit faisant diffuser les impuretés implantées jusqu'à proximité immédiate du mur isolant 34.

A la figure 12, on effectue une opération similaire à celle de la figure 11 mais inversée, pour implanter une impureté de type N de l'autre côté du mur 34. Un masque de résine 46 remplace à cet effet le masque 44 pour protéger la partie droite de la figure et dénuder le silicium sur la partie gauche. Là encore le recuit ultérieur fera diffuser les impuretés implantées jusqu'à proximité du mur 34.

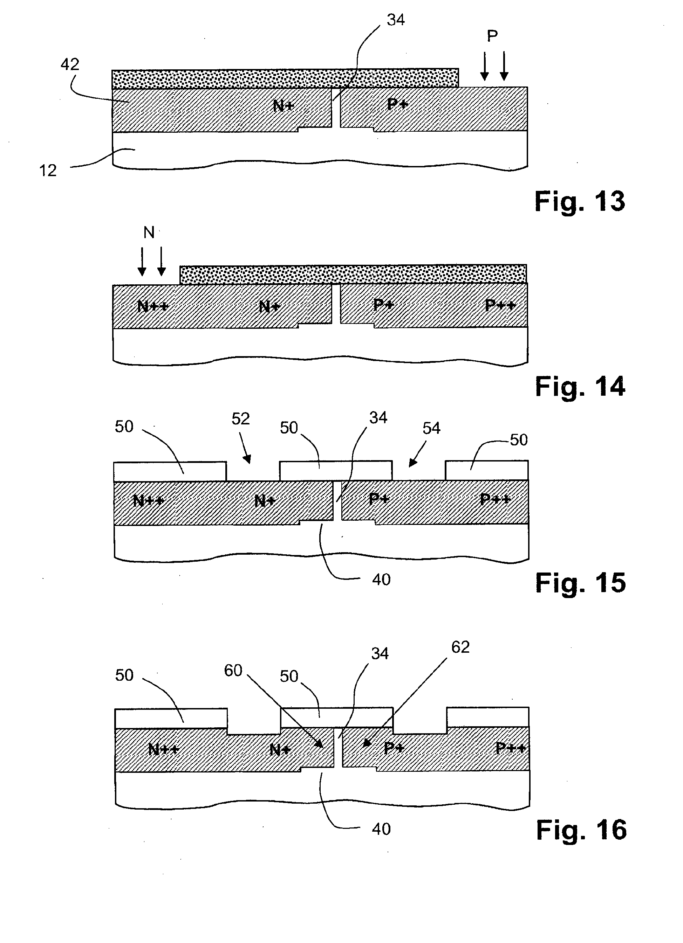

On peut compléter facultativement ces opérations d'implantation par de nouvelles implantations, de chaque côté, pour introduire localement encore plus d'impuretés de type P à droite (Figure 13, dessinée à plus petite échelle que les figures précédentes 2 à 12) et de type N à gauche (Figure 14) à des endroits où on veut établir des contacts électriques avec des interconnexions métalliques.

On recouvre ensuite l'ensemble du substrat d'une couche isolante 50 que l'on grave (Figure 15) pour l'enlever de part et d'autre de la bande isolante 40 qui suit le trajet du guide. La couche isolante 50 subsiste donc au-dessus du guide proprement dit, c'est-à-dire au-dessus de la fente constituée par le mur isolant ou semi-isolant 34 et au-dessus de zones de silicium longeant la fente de part et d'autre de celle-ci ; mais la couche 50 est enlevée et dénude le silicium sur deux bandes latérales 52 et 54 de part et d'autre du guide.

On attaque ensuite le silicium (Figure 16) dans les zones 52 et 54 non protégées par l'oxyde 50 et on enlève une partie de la hauteur du silicium de type N et du silicium de type P.

Le guide à fente est alors défini par la fente 34 en matériau isolant ou semi-isolant, les deux zones de silicium 60 et 62 situées de part et d'autre de la fente et délimitées par la gravure d'une partie de la profondeur du silicium, la zone isolante 40 située au-dessous de la fente et de ces deux zones de silicium, et la couche d'oxyde 50 au-dessus de la fente et des deux zones de silicium.

La profondeur d'attaque du silicium est par exemple d'environ un tiers de la hauteur. Elle doit être suffisante pour bien confiner les ondes optiques sur le trajet du guide à fente même si ce trajet présente des angles de bifurcation ou des courbures, mais pas trop grande pour ne pas induire de pertes optiques trop élevées (et pour ne pas créer en fonctionnement une résistance électrique d'accès trop importante vers les zones 60 et 62).

On peut effectuer à ce stade le recuit qui permet la diffusion des impuretés P et N implantées auparavant (comme expliqué en référence aux figures 11 à 14).

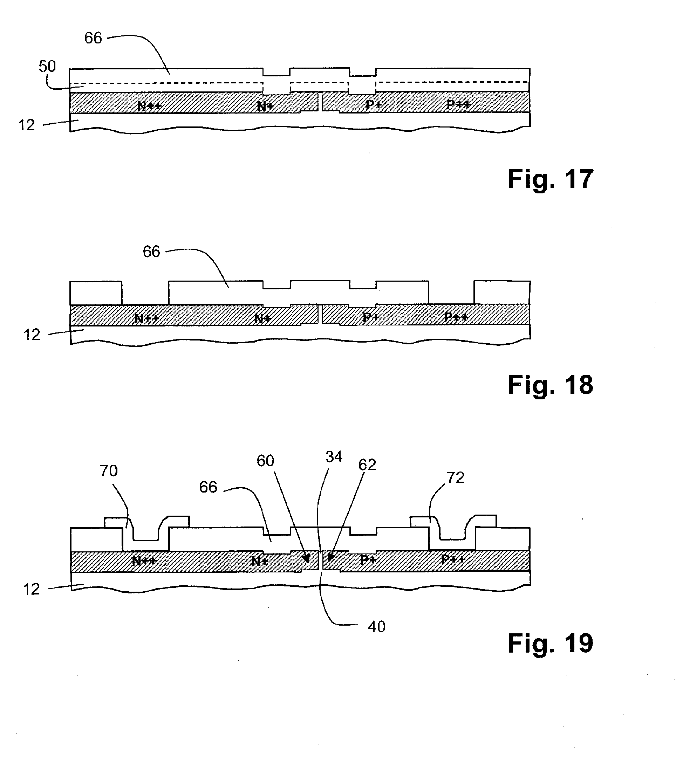

On recouvre alors l'ensemble du substrat d'une nouvelle couche isolante 66 (Figure 17, dessinée à plus petite échelle que les figures précédentes 13 à 16). On ouvre cette couche 66 (Figure 18) pour dénuder le silicium à l'endroit où on avait effectué une implantation supplémentaire N++ et P++ destinée à la prise de contact. Enfin on fait un dépôt de couche métallique (aluminium par exemple) et on grave cette couche pour établir les interconnexions nécessaires et les contacts 70 et 72 d'accès aux deux côtés du guide à fente (Figure 19).

## Revendications

1. Procédé de fabrication d'un guide optique à fente sur silicium, comprenant le dépôt d'une fine couche de silicium monocristallin (30) sur un substrat (10) recouvert d'une couche enterrée isolante (12), et ultérieurement le dépôt uniforme d'une couche isolante ou semi-isolante (34) sur la couche de silicium, le creusement sur toute l'épaisseur de cette couche isolante ou semi-isolante de deux ouvertures à flancs verticaux séparées par un intervalle étroit constituant un mur vertical isolant ou semi-isolant s'étendant le long d'un trajet qui est le trajet désiré pour le guide à fente, et la croissance épitaxiale de silicium monocristalilin (42) dans les ouvertures, **caractérisé en ce qu'**avant le dépôt uniforme de la couche isolante ou semi-isolante, on effectue une oxydation thermique locale dans toute la profondeur de la fine couche de silicium monocristallin (30) pour former une bande oxydée isolante s'étendant le long du trajet du mur vertical, sous celui-ci et de part et d'autre de celui-ci sur toute la longueur du trajet, de sorte que le mur vertical isolant qui sera ultérieurement formé ne soit pas adjacent à la fine couche de silicium monocristallin.

2. Procédé de fabrication selon la revendication 1, **caractérisé en ce que**, après l'étape d'oxydation de la fine couche de silicium monocristallin, on dépose la couche isolante ou semi-isolante et on la grave.

3. Procédé selon la revendication 2, **caractérisé en ce qu'**on effectue la croissance épitaxiale de silicium jusqu'à ce que le silicium vienne en contact avec le mur y compris au-dessus de la bande oxydée isolante.

4. Procédé selon la revendication 1, **caractérisé en ce qu'**on effectue une étape de polissage mécanique et/ou chimique pour ajuster la hauteur du silicium et du mur.

5. Procédé selon l'une des revendications 1 à 4, **caractérisé en ce que**, avant d'effectuer la croissance monocristalline du silicium, on effectue une étape de réduction de l'épaisseur du mur isolant ou semi-isolant.

6. Procédé selon l'une des revendications 1 à 5, **caractérisé en ce qu'**après la croissance épitaxiale du silicium, on effectue un dopage de ce dernier.

7. Procédé selon la revendication 6, **caractérisé en ce qu'**on dope le silicium avec une impureté de type N d'un côté du mur et avec une impureté de type P de l'autre côté.

8. Procédé selon la revendication 6, **caractérisé en ce qu'**on dope le silicium avec une impureté de même type, N ou P, de chaque côté du mur.

## Patentansprüche

1. Verfahren zur Herstellung eines Lichtwellenleiters mit Schlitz auf Silizium, das das Aufbringen einer dünnen monokristallinen Siliziumschicht (30) auf ein Substrat (10), das mit einer eingeschlossenen Isolationsschicht (12) bedeckt ist, und später das gleichmäßige Aufbringen einer isolierenden oder halbisolierenden Schicht (34) auf die Siliziumschicht, die Aushöhlung über die gesamte Dicke dieser isolierenden oder halbisolierenden Schicht von zwei Öffnungen mit vertikalen Flanken, die durch ein schmales Intervall getrennt sind, das eine vertikale isolierende oder halbisolierende Wand bildet, die sich entlang eines Wegs erstreckt, welcher der für die Schlitzführung gewünschte Weg ist, und das epitaxiale Wachstum monokristallinen Siliziums (42) in den Öffnungen umfasst, **dadurch gekennzeichnet, dass** vor dem gleichmäßigen Aufbringen der isolierenden oder halbisolierenden Schicht eine lokale thermische Oxidation in der gesamten Tiefe der dünnen monokristallinen Siliziumschicht (30) durchgeführt wird, um ein isolierendes oxidiertes Band zu bilden, das sich entlang des Wegs der vertikalen Mauer erstreckt, unter dieser und auf der einen und der anderen Seite dieser über die gesamte Länge des Wegs, so dass die isolierende vertikale Mauer, die sich später bildet, nicht an der dünnen monokristallinen Siliziumschicht anliegt.

2. Herstellungsverfahren nach Anspruch 1, **dadurch gekennzeichnet, dass** nach dem Schritt der Oxidation der dünnen monokristallinen Siliziumschicht die isolierende oder halbisolierende Schicht aufgebracht und graviert wird.

3. Verfahren nach Anspruch 2, **dadurch gekennzeichnet, dass** das epitaxiale Siliziumwachstum so lange durchgeführt wird, bis das Silizium mit der Wand inklusive oberhalb des isolierenden oxidierten Bands in Kontakt kommt.

4. Verfahren nach Anspruch 1, **dadurch gekennzeichnet, dass** ein Schritt der mechanischen und/oder chemischen Politur durchgeführt wird, um die Höhe des Siliziums und der Wand anzugleichen.

5. Verfahren nach einem der Ansprüche 1 bis 4, **dadurch gekennzeichnet, dass** vor der Durchführung des monokristallinen Wachstums des Siliziums ein Schritt der Reduzierung der Dicke der isolierenden oder halbisolierenden Wand durchgeführt wird.

6. Verfahren nach einem der Ansprüche 1 bis 5, **dadurch gekennzeichnet, dass** nach dem epitaxialen Wachstum des Siliziums eine Dotierung desselben durchgeführt wird.

7. Verfahren nach Anspruch 6, **dadurch gekennzeichnet, dass** das Silizium mit einer Unreinheit vom Typ N auf einer Seite der Wand und mit einer Unreinheit vom Typ P auf der anderen Seite dotiert wird.

8. Verfahren nach Anspruch 6, **dadurch gekennzeichnet, dass** das Silizium mit einer Unreinheit desselben Typs, N oder P, auf jeder Seite der Wand dotiert wird.

## Claims

1. Process for fabricating an optical slot waveguide on silicon, comprising the deposition of a thin film of single-crystal silicon (30) on a substrate (10) covered with a buried insulating layer (12), and subsequently the uniform deposition of an insulating or semi-insulating layer (34) on the silicon film, the excavation over the entire thickness of this insulating or semi-insulating layer of two openings having vertical sidewalls separated by a narrow gap constituting an insulating or semi-insulating vertical wall extending along a path which is the desired path for the slot waveguide, and the epitaxial growth of single-crystal silicon (42) in the openings, **characterized in that** before the uniform deposition of the insulating or semi-insulating layer, a local thermal oxidation is carried out over the entire depth of the thin single-crystal silicon film (30) in order to form an insulating oxidized strip extending along the path of the vertical wall, beneath and either side of said wall over the entire length of the path, so that the insulating vertical wall that will subsequently be formed is not adjacent to the thin single-crystal silicon film.

2. Fabrication process according to Claim 1, **characterized in that**, after the step of oxidizing the thin single-crystal silicon film, the insulating or semi-insulating layer is deposited and etched.

3. Process according to Claim 2, **characterized in that** the epitaxial growth of silicon is carried out until the silicon comes into contact with the wall, including above the insulating oxidized strip.

4. Process according to Claim 1, **characterized in that** a mechanical and/or chemical polishing step is carried out in order to adjust the height of the silicon and of the wall.

5. Process according to one of Claims 1 to 4, **characterized in that** before a single-crystal silicon is grown, a step of reducing the thickness of the insulating or semi-insulating wall is carried out.

6. Process according to one of Claims 1 to 5, **characterized in that**, after epitaxial growth of the silicon, the latter is doped.

7. Process according to Claim 6, **characterized in that** the silicon is doped with an n-type impurity on one side of the wall and with a p-type impurity on the other side.

8. Process according to Claim 6, **characterized in that** the silicon is doped with the same type of impurity, either n or p, on each side of the wall.
